# EUROPÄISCHE PATENTSCHRIFT

(11) **EP 1 301 249 B1**
(45) Veröffentlichungstag und Bekanntmachung des Hinweises auf die Patenterteilung: **24.01.2007**
(21) Anmeldenummer: 01956540.7
(22) Anmeldetag: 18.07.2001
(51) Int. Cl.: A63C 17/00, A63C 17/12

(54) **SPORT- UND TRANSPORTGERÄT**
SPORT AND TRANSPORT DEVICE
APPAREIL DE SPORT ET DE TRANSPORT

(30) Priorität: 18.07.2000 DE 10035296
(43) Veröffentlichungstag der Anmeldung: 16.04.2003
(73) Patentinhaber: Marco und Roland Bertiller GBR, 72459 Albstadt (DE)
(72) Erfinder: BERTILLER, Roland, 78713 Schramberg (DE)
(74) Vertreter: Göhring, Robert
(86) Internationale Anmeldenummer: PCT/EP2001/008255
(87) Internationale Veröffentlichungsnummer: WO 2002/005910

(56) Entgegenhaltungen:
- EP-A- 0 558 768
- US-A- 5 224 719

## Beschreibung

Die Erfindung betrifft ein Sport- und Transportgerät.

Auf dem Gebiet von Sport- und Transportgeräten sind bereits eine Vielzahl von Geräten bekannt. Je nach der Geländeart auf dem diese verwendet werden sollen, kommen beispielsweise Skateboards oder Snowboards zum Einsatz. Diese Geräte besitzen den Nachteil, dass diese lediglich durch das Gefälle der Oberfläche, auf der sie verwendet werden oder durch größere körperliche Anstrengung des Benutzers, z.B. durch Abheben eines Fußes von dem Gerät und Abdrücken an der Oberfläche, angetrieben bzw. beschleunigt oder abgebremst werden können.

In DE 196 25 948 A1 ist ein Sport- und Transportgerät mit einem Standbrett, mindestens drei Laufrädern und einer Lenkvorrichtung beschrieben, bei dem eine Antriebsvorrichtung durch Verlagerung des Körpergewichts von einem Bein auf das andere eine somit ausgelöste Bewegung und eine entsprechende Antriebskinematik mindestens ein Rad in Drehung versetzt und so eine Bewegung hervorruft.

Ähnliche Sport- und Transportgeräte mit einem Standbrett sind aus DE 88 08 3 66 U1, DE 692 00 850 T2 und WO 92/06753 A1 bekannt. Diese Geräte weisen ebenfalls oberhalb der Deckplatte eine Betätigungsvorrichtung für einen Fuß einer das Gerät fahrenden Person auf. Diesen bekannten Betätigungsmitteln ist gemeinsam, daß die das Gerät fahrende Person den Fuß in vertikaler Richtung hin zur Deckplatte bzw. zur Standplatte betätigen muß.

Weilere ähnliche Sportgeräte sind in EP-A-0 558 768 und US-A-5 224 719 beschrieben.

Die vorliegende Erfindung hat das Ziel, ein Sport- und Transportgerät zu schaffen, das sicherer gefahren werden kann und einfach zu lenken ist, bei gleichzeitig einfachem Aufbau.

Diese Aufgabe wird gelöst durch ein Sport- und Transportgerät mit den Merkmalen des Anspruchs 1.

Weiterbildungen der Erfindung sind Gegenstand der Unteransprüche.

Durch das erfindungsgemäße Vorsehen von Betätigungsmitteln an der Oberseite der Deckplatte kann der Fahrer bzw. Benutzer des Gerätes diese während der Fahrt bedienen ohne die Füsse von der Deckplatte zu nehmen.

Aufgrund der Antriebsfunktion der Deckplatte, d.h. das Schwenken der Deckplatte um die Schwenkachse, nimmt die Deckplatte immer eine andere Position ein. Um während der gesamten Fahrt, d.h. unabhängig von der aktuellen Position der Deckplatte die Betätigung von Vorrichtungen, die an dem Rahmen oder den Rädern vorgesehen seien können zu erlauben sind die Betätigungsmittel und die jeweilige Vorrichtung vorzugsweise über Bautenzüge verbunden.

Gemäß einer Ausführungsform des erfindungsgemäßen Sport- und Transportgerätes stellen die Vorrichtung und die dazugehörigen Betätigungsmittel ein Schaltsystem dar. Durch das Schaltsystem, können verschiedene Gänge in einem Getriebe erzeugt werden, durch das mindestens eines der Räder angetrieben wird. Das Getriebe ist vorzugsweise an dem Rahmen befestigt. Durch eine solche Gangschaltung ist es für den Fahrer möglich das Fahrverhalten des Gerätes an die Fahrbahnbedingungen, insbesondere die Steigung anzupassen.

Das Schaltsystem kann eine Kettenschaltung, eine Zahnriemenschaltung oder eine Schiebeschaltung umfassen. Im letzteren Fall kann das Getriebe einen Schaltkäfig umfassen. Abhängig von der Art der Übertragung zwischen Getriebe und dem dadurch angetrieben Rad, z.B. Kette oder Zahnriemen, können mindestens zwei Gänge durch ein geeignetes Schaltsystem in dem Getriebe aktiviert werden.

Gemäß einer weiteren Ausführungsform können die Vorrichtung und die dazugehörigen Betätigungsmittel ein Bremssystem darstellen. Bei dieser Ausführungsform kommen die Vorteile des erfindungsgemäßen Aufbaus des Sport- und Transportgerätes besonders zum Tragen, da es zur Gewährleistung der Sicherheit des Fahrers und anderer Verkehrsteilnehmer notwendig ist, dass der Fahrer die Bremse zu jedem Zeitpunkt und in jeder Position der Deckplatte bedienen kann und diese zuverlässig greift. Das Bremssystem kann unterschiedlich ausgestaltet sein. Vorzugsweise weist es folgende Hauptteile auf:
Eine Bremsplatte
Eine Drehbuchse
Zwei Bremsnippel
Zwei Bautenzüge
Zwei Gegenlager
Eine Hülse

Es liegt auch im Sinne der Erfindung das Sport- und Transportgerät mit einen Elektro-Motor auszustatten, der mindestens ein Rad antreibt. Dieser Motor kann in das Getriebe integriert sein. Je nach Wunsch kann der Motor zur direkten Kraftübertragung auf das anzutreibende Rad oder zur Servounterstützung der durch die Schwenkbewegung der Deckplatte hervorgerufenen Bewegung eingesetzt werden. Die Stromversorgung hierfür kann durch einen Akku gewährleistet werden, der beispielsweise in dem Rahmen des Gerätes untergebracht seien kann.

Die Steuerung der Richtung des erfindungsgemäßen Sport- und Transportgerätes erfolgt vorzugsweise über Gewichtsverlagerung des Fahrers in seitliche Richtung. Hierzu umfasst der Rahmen vorzugsweise eine lenkbare Vorderachse. Diese kann an ein Hauptträgerrohr des Rahmens angeflanscht sein und ist zur Erhöhung des Fahrkomforts vorzugsweise als Federelement ausgelegt.

Die Räder des Sport- und Transportgerätes sind vorzugsweise lösbar mit dem Rahmen verbunden. Durch diese lösbare Verbindung wird dem erfindungsgemäßen Sport- und Transportgerät eine hohe Flexibilität bezüglich des Einsatzgebietes verliehen. So kann das Gerät auf einfache Weise in ein Wintersportgerät umgerüstet werden. Hierzu ist lediglich das Abnehmen der Räder und Ersetzen durch beispielsweise Kufen oder Räder mit Spikes erforderlich.

In einer Weiterbildung der Erfindung weißt das Sport- und Transportgerät eine Elastomer-Federeinrichtung auf, die den Rahmen des Gerätes mit einer Radachse elastisch koppelt. Dabei ist die Federung so gewählt, daß die Einlenkung der Achse, d.h. der Einschlagwinkel, direkt abhängig ist von einem Verbindungswinkel, der sich zwischen Vorderachse und Rohrgelenkachse befindet.

Die Erfindung wird im Folgenden anhand der beiliegenden Figuren, die Ausführungsbeispiele des Gegenstandes der Erfindung darstellen, beschrieben.

Es zeigen:
Fig. 1: eine Seitenansicht einer Ausführungsform des erfindungsgemäßen Sport- und Transportgerätes;
Fig. 2: eine perspektivische Draufsicht auf eine Ausführungsform des erfindungsgemäßen Sport- und Transportgerätes;
Fig. 3: eine perspektivische Unteransicht einer Ausführungsform des erfindungsgemäßen Sport- und Transportgerätes;
Fig. 4: eine Frontansicht einer Ausführungsform des erfindungsgemäßen Sport- und Transportgerätes;
Fig. 5: eine Rückansicht einer Ausführungsform des erfindungsgemäßen Sport- und Transportgerätes;
Fig. 6: eine schematische Draufsicht auf eine Ausführungsform des erfindungsgemäßen Sport- und Transportgerätes mit Gangschaltung;
Fig. 7: eine Unteransicht einer Ausführungsform des erfindungsgemäßen Sport- und Transportgerätes mit Bremssystem;
Fig. 8: eine perspektivische Ansicht einer Ausführungsform des erfindungsgemäßen Sport- und Transportgerätes mit Winterausstattung;
Fig. 9: eine schematische Darstellung des Eingriffes einer Zahnstange in das Antriebsgetriebe;
Fig. 10: eine perspektivische Darstellung des Eingriffes einer Zahnstange in das Antriebsgetriebe;
Fig. 11: eine perspektivische Schnittansicht eines Getriebes eines erfindungsgemäßen Sport- und Transportgerätes ohne Gangschaltung;
Fig. 12: eine perspektivische Schnittansicht eines Getriebes eines erfindungsgemäßen Sport- und Transportgerätes mit Kettenschaltung;
Fig. 13 und 13a: eine perspektivische Schnittansicht bzw. eine Schnittansicht eines Getriebes eines erfindungsgemäßen Sport- und Transportgerätes mit Schiebeschaltung in einer ersten Position;
Fig. 14 und 14a: eine perspektivische Schnittansicht bzw. eine Schnittansicht eines Getriebes eines erfindungsgemäßen Sport- und Transportgerätes mit Schiebeschaltung in einer zweiten Position;
Fig. 15 bis 17: perspektivische Ansichten einer Ausführungsform eines Getriebes des erfindungsgemäßen Sport- und Transportgerätes mit Motor;
Fig. 18: eine perspektivische Ansicht von schräg unten auf eine weitere Ausführungsform eines erfindungsgemäßen Sport- und Transportgerätes mit Blick auf ein Gelenksystem, das den Rahmen mit der Vorderachse des Gerätes verbindet;
Fig. 19: eine Draufsicht auf das Gelenkachsensystem von der Seite in vergrößerten Darstellung;
Fig. 20: eine teilweise Schnittansicht des Gelenkachsensystems;
Fig. 21: eine perspektivische Draufsicht von vom auf die Vorderachse des Gerätes samt Laufräder und Federungssystem;
Fig. 22: eine ähnliche Ansicht wie in Figur 21, jedoch von oben auf den Rahmen gesehen;
Fig. 23: die Ansicht auf den Rahmen samt Federungssystem von unten;
Fig. 24: eine Ansicht ähnlich wie Fig. 19, jedoch mit aufgeschnittenem Federungssystem.

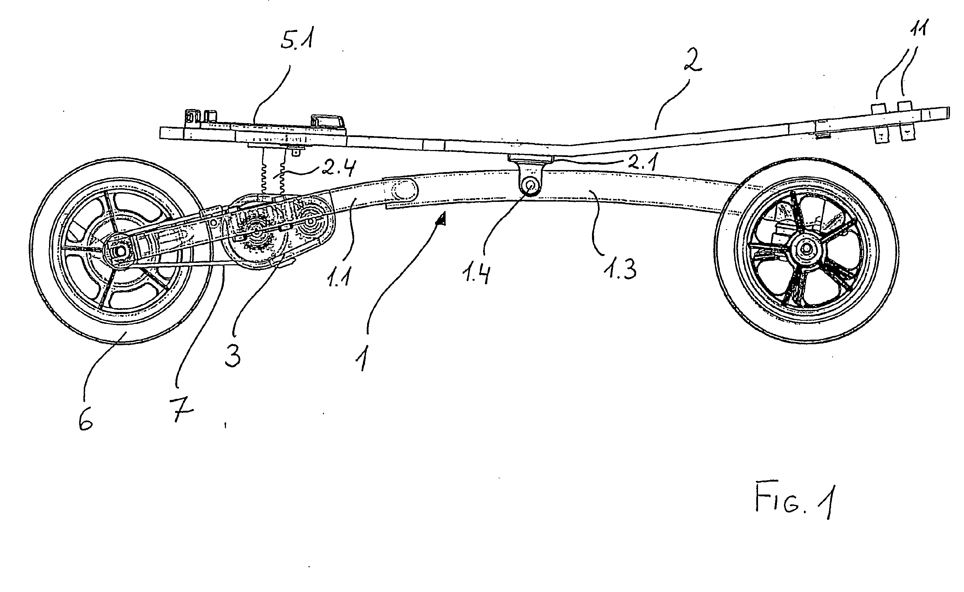

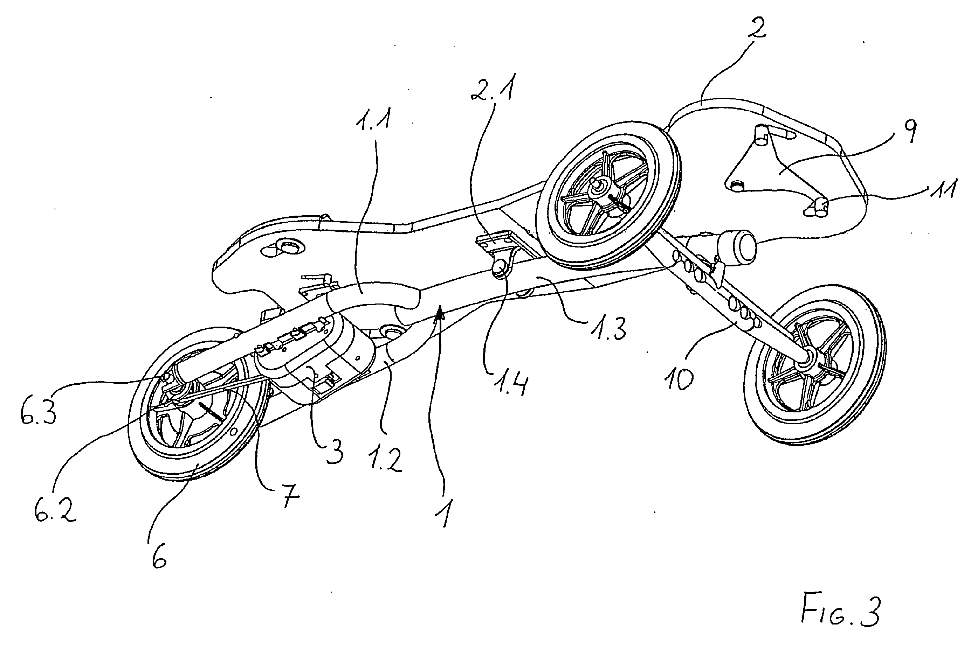

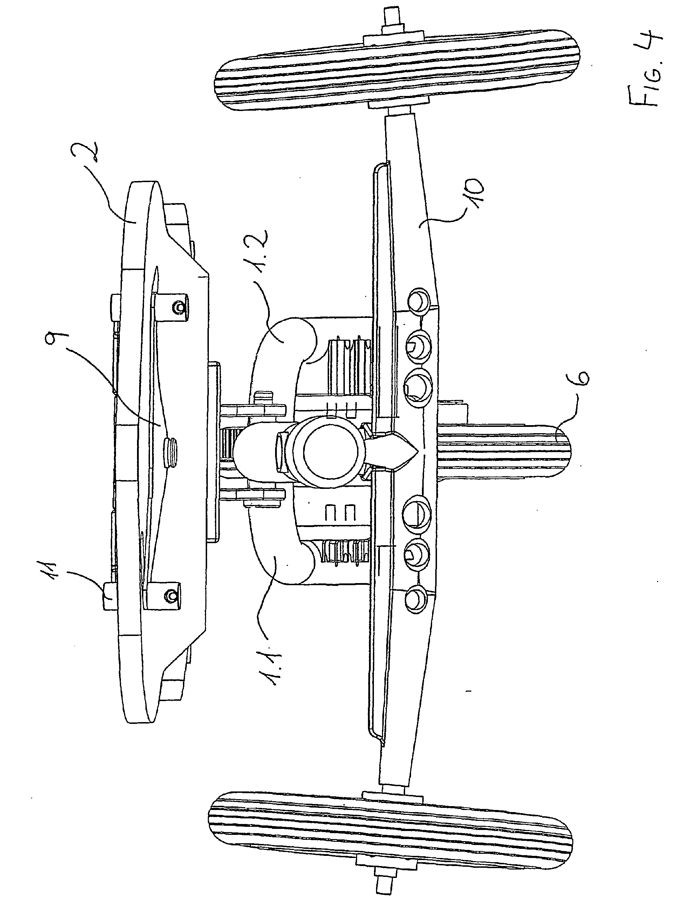

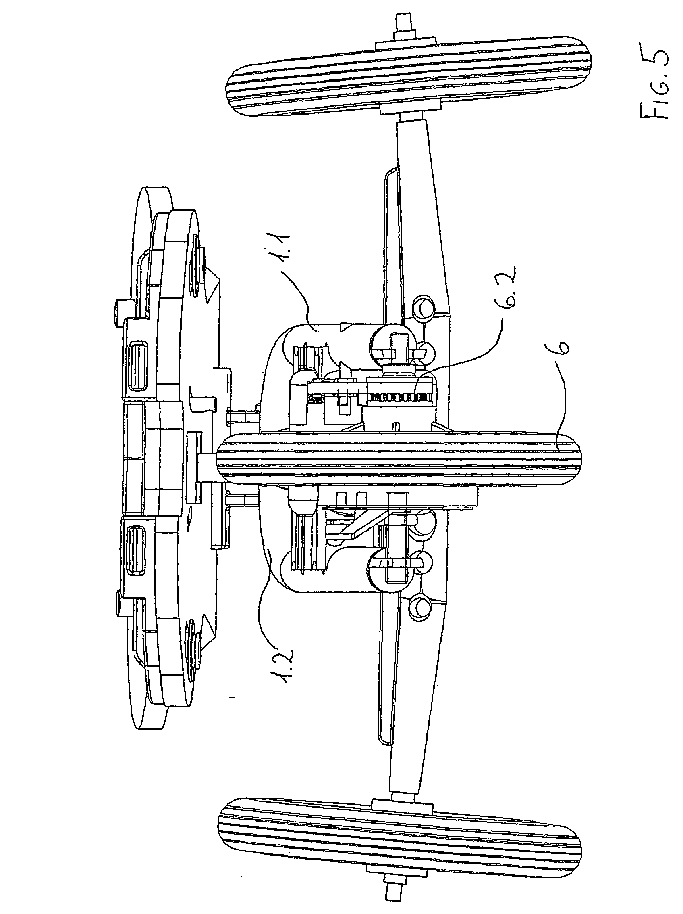

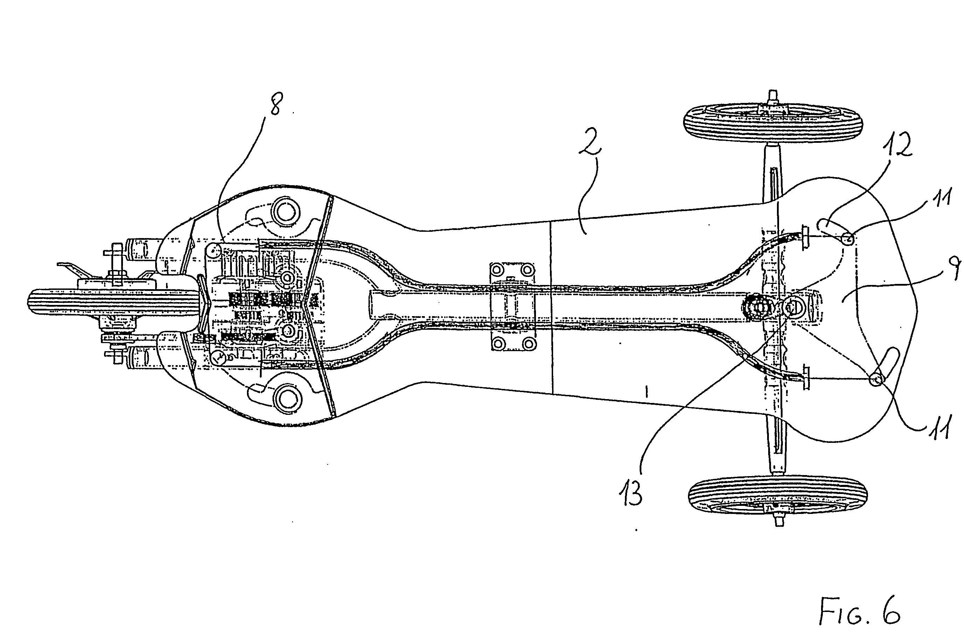

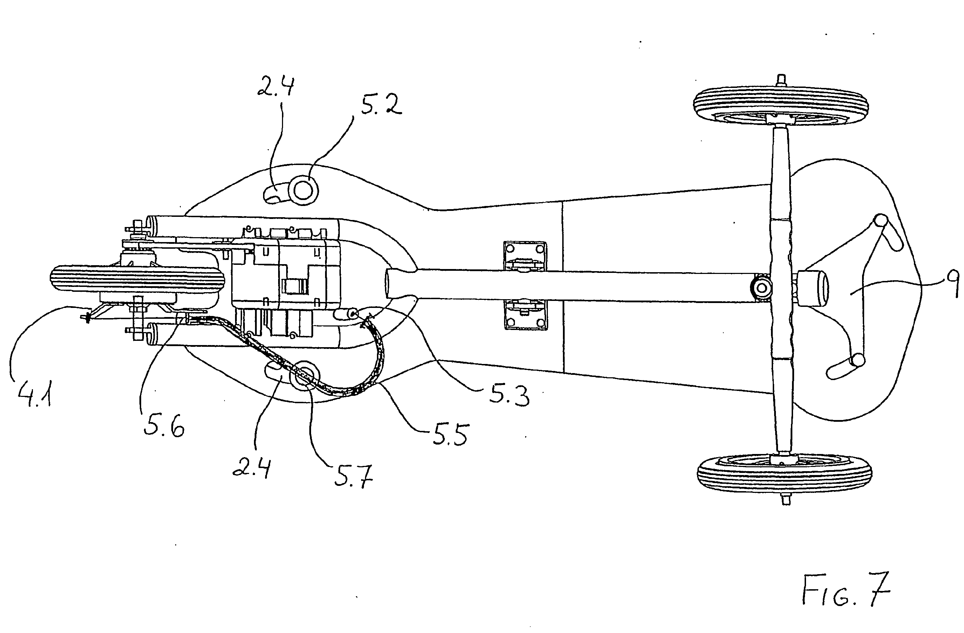

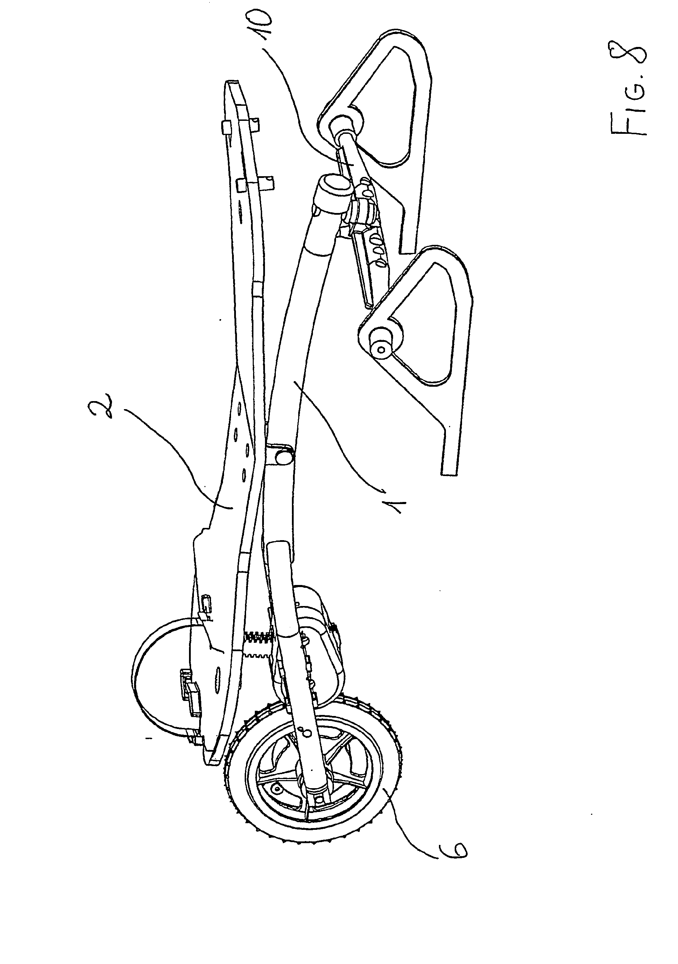

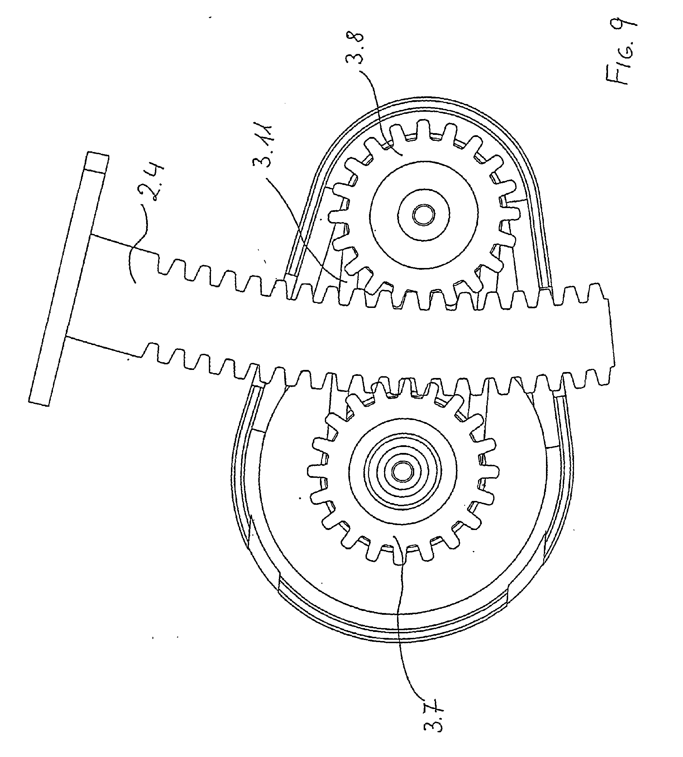

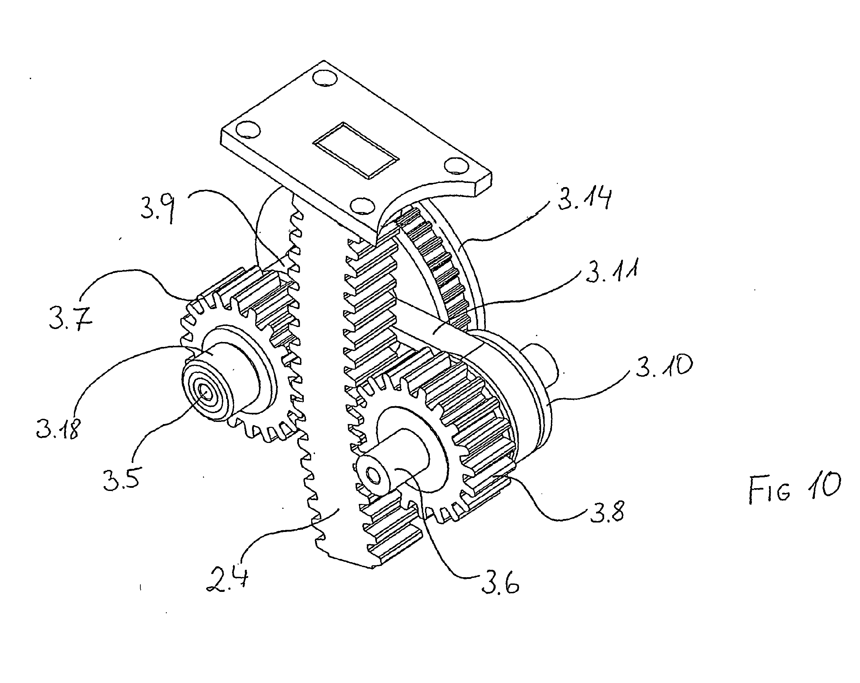

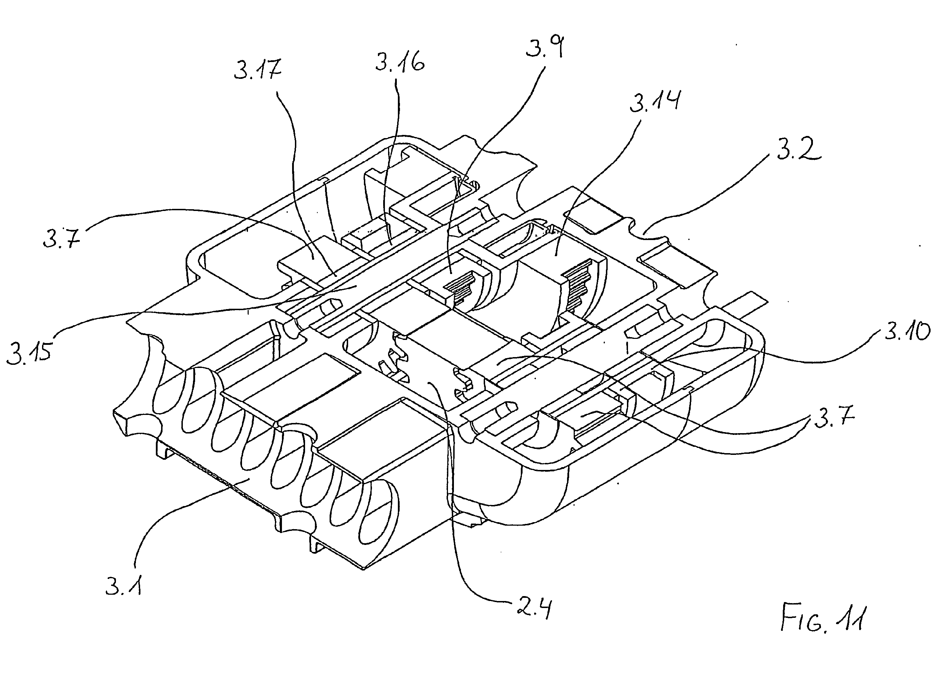

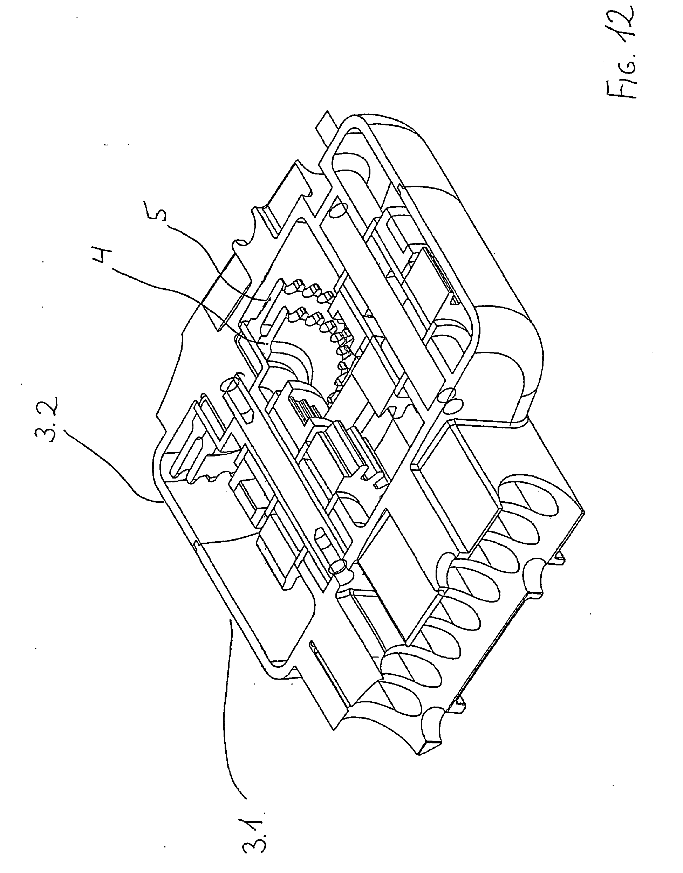

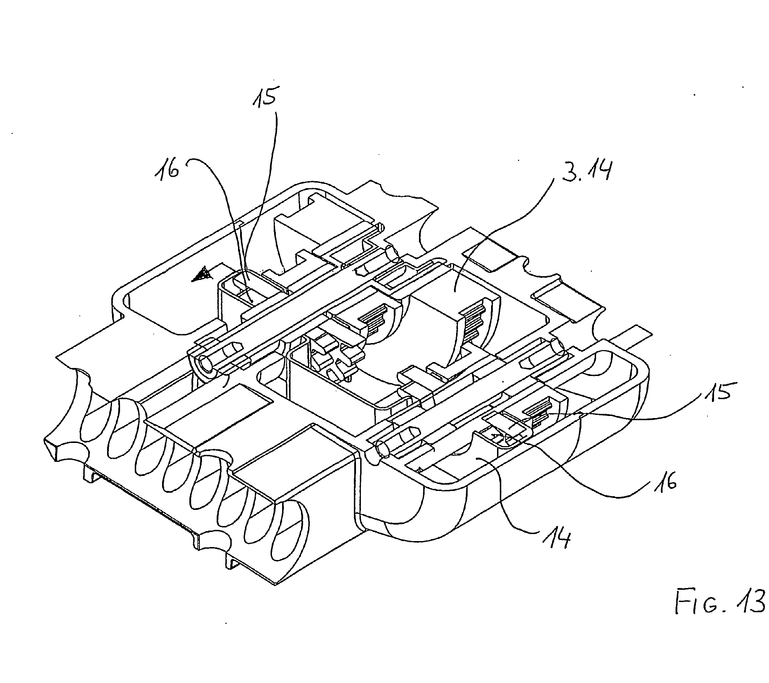

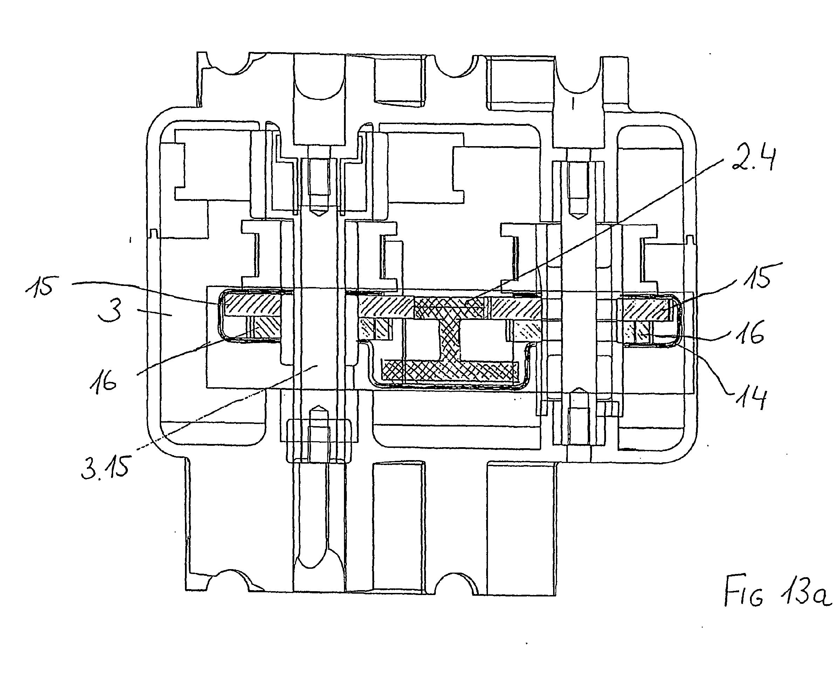

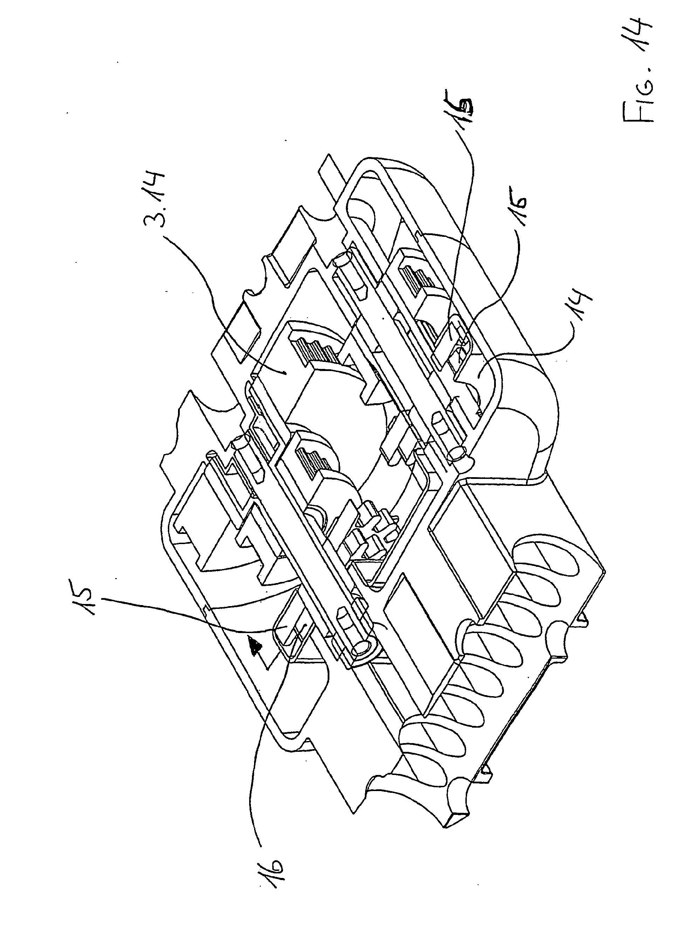

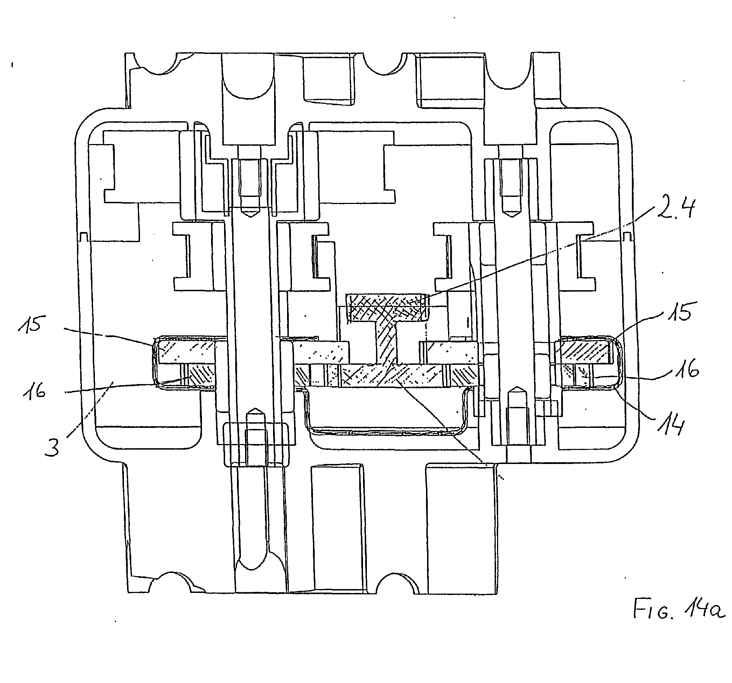

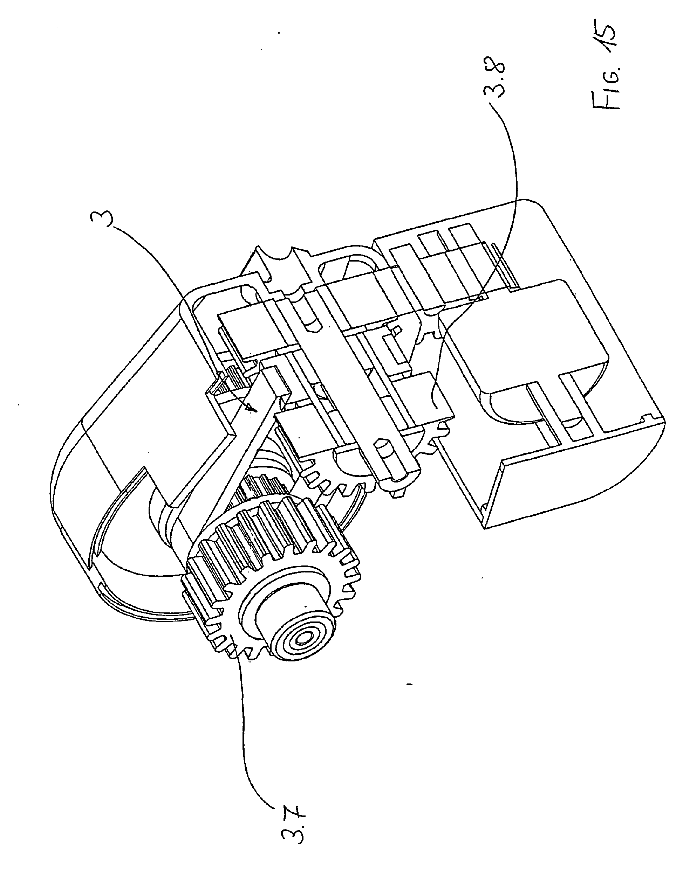

Bezugnehmend auf die Figuren 1 bis 5 wird der Aufbau des erfindungsgemäßen Sport- und Transportgerätes beschrieben.

Als Basis dient ein Rohrrahmen 1, der ein Hauptträgerrohr 1.3 umfasst und im hinteren Bereich als Gabel 1.1, 1.2 ausgeführt ist. Der Rohrrahmen 1 ist zumindest in dem Bereich des Hauptträgerrohres 1.3 gebogen. Am vorderen Ende des Hauptträgerrohres 1.3, d.h. dem Ende, das der Gabel 1.1, 1.2 gegenüberliegt, ist eine lenkbare Vorderachse 10 angeflanscht. Die Vorderachse 10 entspricht im Prinzip den bereits von Skateboards bekannten Vorderachsen. Der Lenkwinkel wurde aber aufgrund der Tatsache, dass nur eine lenkbare Achse vorhanden ist verdoppelt. Die Geometrie der Achse 10 wurde so konzipiert, dass auch bei schwierigem Geländer eine entsprechend Federwirkung erzielt wird. Weiterhin ist die Aufhängung der Räder an der Vorderachse 10 mit einem Sturz versehen, um eine Verbesserung der Stabilität des Fahrverhaltens zu erzielen. Der Sturz kann beispielsweise 5° betragen.

In der dargestellten Ausführungsform weist das Sport- und Transportgerät drei Räder auf, wobei lediglich ein Rad als Antriebsrad 6 dient. Dieses ist am dem anderen Ende des Hauptträgerrohres 1.3 in die Gabel 1.1, 1.2 eingesetzt. Ebenfalls in die Gabel 1.1, 1.2 ist der Teil der Antriebsvorrichtung, der ein Antriebsgetriebe 3 darstellt eingesetzt. Das Antriebsrad 6 wird in die Gabel 1.1,1.2 eingesetzt und verspannt.

Wie oben beschrieben stellt die Gabel 1.1, 1.2 die Aufnahmevorrichtung zur formschlüssigen Aufnahme des Getriebes 3 dar und dient gleichzeitig als Halterung für das Antriebsrad 6. Diese Ausführungsform weist den Vorteil auf, dass das Getriebe 3 durch Formschluss gehalten wird und daher keine weiteren Fixierelemente notwendig sind. Weiterhin stellt die gleichzeitige Verwendung der Gabel 1.1, 1.2 als Halterung für das Antriebsrad 6 eine konstruktive Vereinfachung dar. Das Rad 6 und das Getriebe 3 über das das Rad 6 angetrieben wird sind bei dieser Ausgestaltung an dem gleichen Bauelement 1.1, 1.2 befestigt, so dass es nicht zu einer relativen Verschiebung zwischen dem Rad 6 und dem Getriebe 3 kommen kann, was zu Störungen, wie z.B. einem Kettenriss führen könnte.

Der Antrieb des Antriebsrades 6 erfolgt vorzugsweise mittels einer Kette oder einem Zahnriemen 7 über das Antriebsgetriebe 3.

Die Deckplatte 2, die beispielsweise eine Skateboard-Form aufweisen kann, ist schwenkbar mit dem Rohrrahmen 1 verbunden. Diese Verbindung kann beispielsweise wie in den Figuren 1 bis 5 dargestellt ausgeführt sein. Hierbei ist auf der Unterseite der Deckplatte 2 eine Gelenkplatte 2.1 angebracht. Mittels der Gelenkplatte 2.1 wird die Deckplatte 2 an der Gelenkbuchse 1.4 am Hauptträgerrohr 1.3 schwenkbar befestigt. Um das Schwenken der Deckplatte 2 um diese Achse nicht zu behindern ist der Rohrrahmen 1 vorzugsweise gebogenen geformt. Darüber hinaus kann die Deckplatte 2 eine Form aufweisen, bei der im Bereich der Schwenkachse ein Knick 2.2 vorgesehen ist und sich die Deckplatte 2 so von diesem Knick 2.2 zu den jeweiligen Enden der Platte 2 nach oben erstreckt. Neben dieser V-förmigen Ausgestaltung kann die Deckplatte beispielsweise auch zwei Knicke (nicht dargestellt) aufweisen zwischen denen sich eine im Ausgangszustand waagerechte Fläche erstreckt und die Platte sich von den Knicken zu den Enden jeweils unter einem geringen Winkel zu der waagerechten Fläche nach oben erstreckt. Die Form der Deckplatte 2 wird aufgrund der ergonomischen Erfordernisse, wie Standfestigkeit, Steuerbarkeit, Bremsung und Schaltung des Gerätes sowie der Krafteinleitung gewählt. Die Abknickung der Deckplatte 2 erhöht deren Steifigkeit und stellt den notwendigen Weg zur Krafteinleitung zur Verfügung. Vorzugsweise ist die Platte mit konkav verlaufenden Seiten ausgestaltet, wodurch die Brettsteifigkeit erhöht wird und Gewicht eingespart werden kann.

Aufgrund der gebogenen Form des Rahmens 1 und einer abgeknickten Form der Deckplatte 2 ist somit gewährleistet, dass die Deckplatte 2 durch Schwenk- bzw. Wippbewegungen nach vorne und nach hinten, nach oben und unten bewegt werden kann. Die Deckplatte 2 wird durch Gewichtsverlagerungen des Betreibers in diese Wippbewegung gebracht.

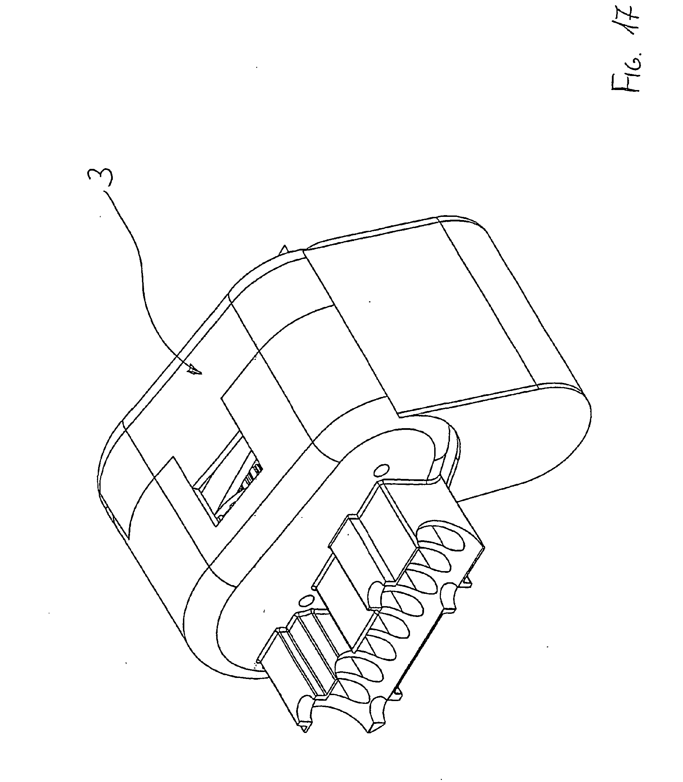

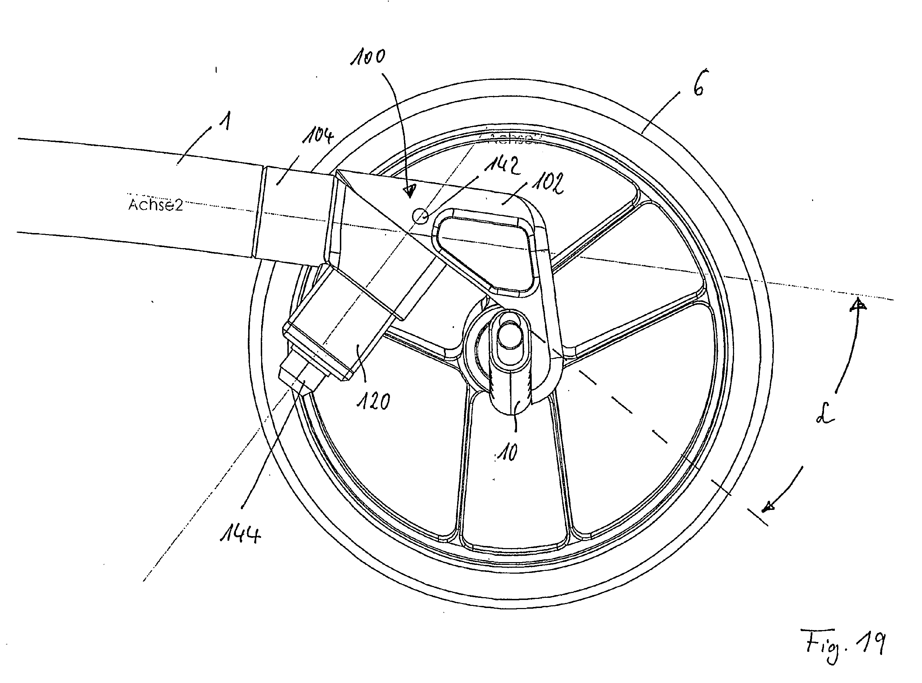

An der Unterseite der Deckplatte 2 ist in dem Bereich, der im eingebauten Zustand über dem Getriebe 3 liegt, ein Mittel 2.4 befestigt, das mit dem Getriebe 3 eine Antriebsvorrichtung bildet. In der dargestellten Ausführungsform wird dieses Mittel durch eine Zahnstange 2.4 gebildet. Durch die Wippbewegungen der Deckplatte 2 taucht die Zahnstange 2.4 im Wechsel in das und aus dem Antriebsgetriebe 3 ein und aus und treibt dadurch das Getriebe 3 an. Das Getriebe 3 wird unter Bezugnahme auf die Figuren 9 bis 17 später genauer erklärt werden. Vorzugsweise ist dieses aber so ausgelegt, dass das Abtriebsrad 6 permanent, d.h. bei der Auf- und der Ab-Bewegung der Zahnstange in Vorwärtsdrehung versetzt wird.

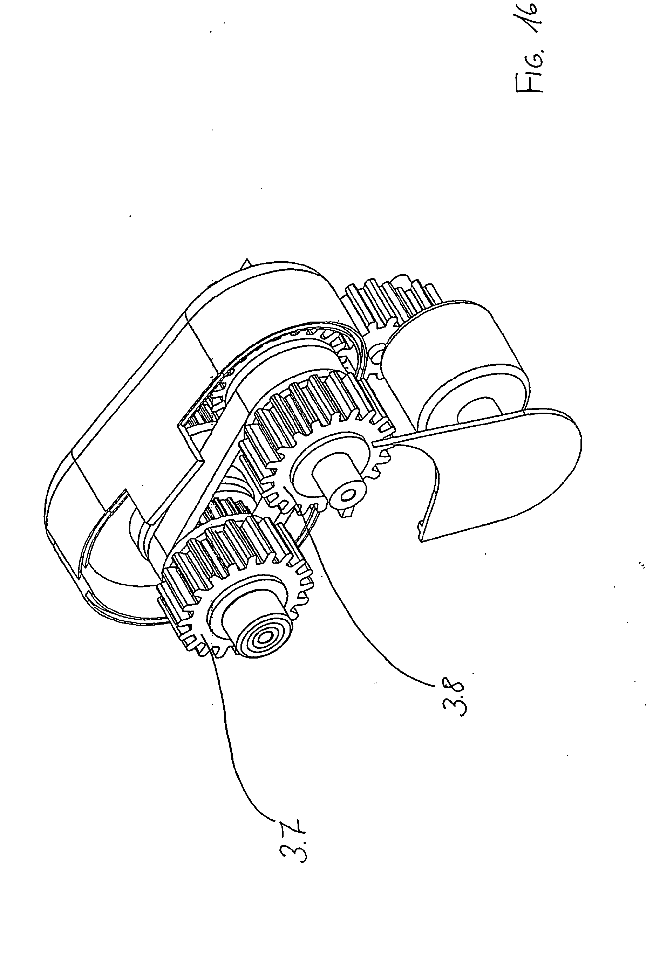

In Figur 8 ist eine Ausführungsform des erfindungsgemäßen Sport- und Transportgerätes gezeigt, bei dem die vorderen Räder durch Kufen ersetzt wurden und das Antriebsrad 6 mit Spikes versehen wurde. Der restliche Aufbau des Gerätes entspricht dem in Figuren 1 bis 5 gezeigten und oben beschriebenen Aufbau.

Das Getriebe 3 ist formschlüssig zwischen die Gabel 1.1, 1.2 eingebaut. Der Halt wird über ein Getriebegehäuse gegeben, das vorzugsweise zwei Getriebeschalen 3.1 und 3.2 aufweist. An dem Getriebegehäuse 3.1, 3.2 können Vorsprünge vorgesehen seien, die der Form der Gabel 1.1, 1.2 angepasst sind. Weiterhin weist das Getriebe 3, einer Antriebswelle und eine Gegenlaufwelle auf. Antriebswelle und Gegenlaufwelle sind in den Getriebeschalen 3.1 und 3.2 auf den Achsen 3.5 und 3.6 gelagert. Die Antriebswelle ist in den Gehäuseteilen 3.1 und 3.2 mit den Lagern 3.18 gelagert.

Unter Bezugnahme auf die Figuren 9 bis 11 wird nun die Funktionsweise des Getriebes 3, in das die Zahnstange 2.4 eingreift, genauer beschrieben. Wie sich aus Figur 9 ergibt läuft die Zahnstange 2.4 formschlüssig zwischen zwei Zahnritzeln 3.7, 3.8, die über einen Zahnriemen 3.11 miteinander verbunden sind, und treibt diese vorwärts und rückwärts. Wie sich aus Figur 10 entnehmen lässt sind die Ritzel 3.7 und 3.8 jeweils auf Achsen 3.5 und 3.6 gelagert. Ebenfalls auf den beiden Achsen 3.5 und 3.6 gegenüberliegend befinden sich zwei Synchronscheiben 3.9 und 3.10, welche mittels des Zahnriemen 3.11 miteinander verbunden sind. Die Synchronscheibe 3.10 und das Ritzel 3.8 auf der Gegenlaufwelle sind starr miteinander verbunden und sind auf den Achsen 3.6 mit Nadellagern gelagert. Die Abtriebsscheibe 3.14 ist zur Übertragung der Antriebskraft, kraftschlüssig mit der Lagerhülse verbunden. Die Synchronscheibe 3.9 und das Ritzel 3.7 sind über Freiläufe 3.16 und 3.17 auf der Lagerhülse 3.15 gelagert.

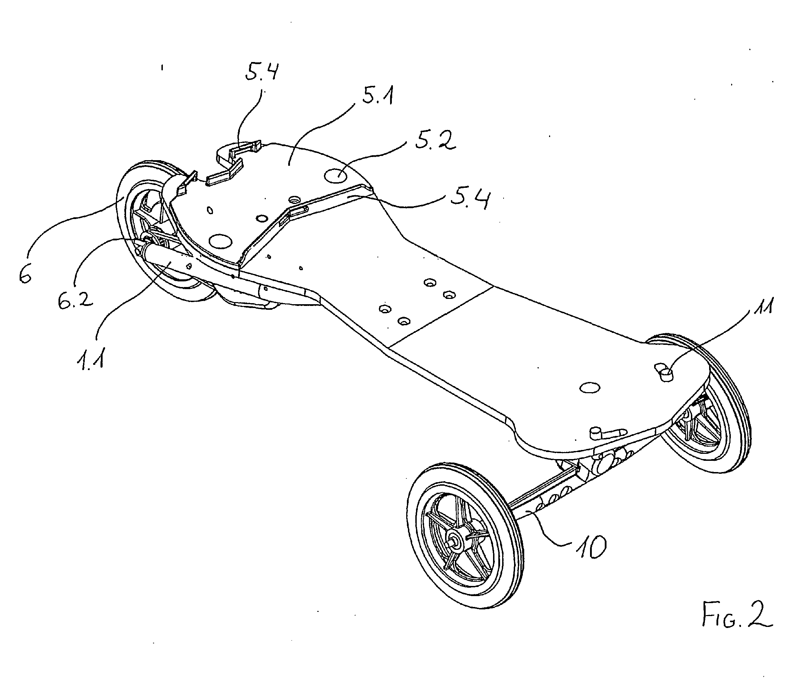

Über die Abtriebsscheibe 3.14 läuft ein Zahnriemen 7 bzw. eine Kette 7 zum Antriebsrad 6 auf eine Synchronscheibe 6.2 oder ein Kettenritzel 6.2 (siehe Figuren 2, 3 und 5), und überträgt so die von der Zahnstange 2.4 in das Getriebe 3 eingebrachte Auf- und Ab-Bewegung in eine Rotationsbewegung des Antriebsrades 6.

Das Rad 6 ist auf der Hinterachse 6.3 rollengelagert. In den Radkörper ist die Antriebsachse kraftschlüssig eingesetzt, auf welcher eine Synchronscheibe bzw. ein Kettenritzel 6.2 mit einem Freilauf gelagert ist und somit die Kraftübertragung übernimmt. Der Antrieb erfolgt mittels eines Zahnriemens 7 bzw. einer Kette 7 über die Antriebswelle des Getriebes.

In der dargestellten Ausführungsform ist das Antriebsrad das hintere Rad des Gerätes. Durch Ändern der Freilaufanordnung kann die Antriebsrichtung aber auch umgekehrt werden, so dass nicht das Antriebsrad vorne und die gelenkte Achse hinten ist. Die Antriebsfunktion über die Deckplatte bleibt dabei unverändert.

Gemäß einer bevorzugten Ausführungsform kann das Sport- und Transportgerät eine Gangschaltung aufweisen. Ein Getriebe mit Gangschaltung ist in den Figuren 12 bis 14 dargestellt.

In Fig. 12 ist die Möglichkeit einer Schaltfunktion dargestellt, wobei es sich um eine Kettenschaltung handelt. Die Synchronscheibe 3.14 wird durch die Kettenräder 4 und 5 ersetzt. Der Zahnriemen 3.11 wird durch eine Kette 7 ersetzt. Die Kette 7 treibt über die Kettenräder 4 und 5 das Antriebsrad 6 über ein Kettenritzel 6.2 an. Auf Grund der unterschiedlichen Durchmesser der Kettenräder 4 und 5 auf welchen die Kette 7 über eine Schalteinheit verschoben wird, sind unterschiedliche Antriebsübersetzungen möglich.

Die erwähnte Schalteinheit umfasst einen Umwerfer 8 (siehe Figur 6), der an der Gabel 1.1 und 1.2 verschiebbar gelagert ist. Die Betätigung der Umwerfers 8 erfolgt mittels eines zweiarmigen Schalthebels 9, welcher in der Deckplatte 2 um eine Drehachse 13 drehbar gelagert ist. Mittels zweier Schaltnippel 11 wird der Umwerfer 8 über einen Bautenzug wechselseitig betätigt. Die Schaltnippel 11 sind vorzugsweise stiftförmig ausgestaltet und an der Oberseite des Schalthebels 9 befestigt. Der Umwerfer 8, der Bautenzug und die Schaltnippel 11 sind kraftschlüssig miteinander verbunden. Die Schaltnippel 11 des Schalthebels 9 ragen durch bogenförmige Nuten 12 nach oben aus der Deckplatte 2 heraus. Durch Betätigung der Schaltnippel 11 mit dem vorderen Standfuß (Ferse bzw. Fußspitze), d.h. durch Verschieben der Nippel 11 innerhalb der Nuten 12 wird der Schalthebel gedreht und die entsprechende Antriebsübersetzung geschaltet. Der Schalthebel 9 selbst ist entgegen der Schaltrichtung als Federelement ausgeführt. Dies bedeutet, dass ohne Schalten zu wollen auf die Schaltnippel 11 getreten werden kann. Diese weichen nach unten aus ohne einen Schaltvorgang einzuleiten. Der Schalthebel 9 wird jeweils in seiner Endstellung über eine Sicke fixiert.

Dadurch kann die Schaltung, zu jedem Zeitpunkt, bzw. in jeder Position der Deckplatte 2 mit dem Fuß betätigt werden. Es muss weder eine Fahr- Antriebsnoch eine Lenkoperation unterbrochen bzw. verändert werden.

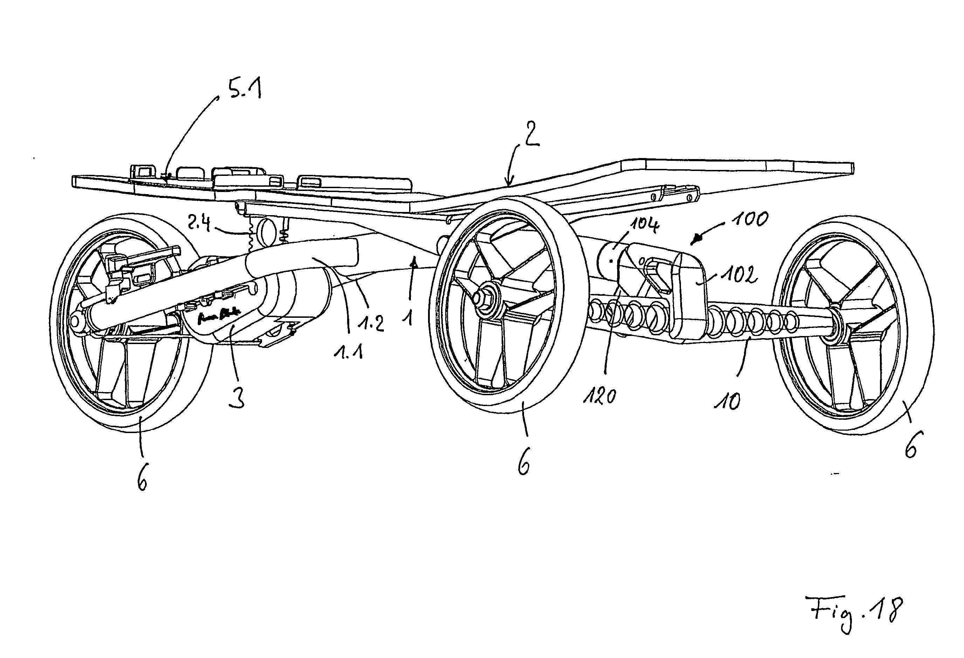

In Figuren 13, 13a und 14, 14a ist eine weitere Möglichkeit einer zweistufigen Schaltung gezeigt. Die Zahnstange besteht hierbei aus zwei unterschiedlichen Zahnsegmenten, die nebeneinander angeordnet sind und von einander beabstandet sind. Die Segmente weisen unterschiedliche Breiten auf und können durch eine Querstrebe miteinander verbunden sein, um die Stabilität zu erhöhen. Die Zahnstange ist wie in der zuvor beschriebenen Ausführungsform an der Deckplatte 2 befestigt. In Figur 13 ist eine erste Schaltstellung gezeigt. Ein Schaltkäfig 14, in dem vier Ritzel von denen jeweils zwei einen kleineren 16 und zwei einen größeren Durchmesser 17 aufweisen, integriert sind ist auf der Antriebs- und der Getriebeachse verschiebbar. Die Schaltung bzw. die Verschiebung des Schaltkäfigs erfolgt genauso wie bei der Kettenschaltung. D.h. der Schaltkäfig ist fest mit dem Bautenzug verbunden und kann somit in die gewünschte Schaltposition mittels des Schalthebels verschoben werden. Ist der Schaltkäfig 14 in der in Figur 13 und 13a gezeigten nach hinten verschobenen Position, so tritt das kleinere Zahnstangensegment, dessen Breite dem Abstand zwischen den beiden größeren Ritzeln 15 entspricht, mit den beiden auf gegenüberliegenden Achsen gelagerten größeren Ritzeln 15 in Eingriff. Wird der Schaltkäfig 14 entsprechend der Pfeilrichtung über den Bautenzug verschoben, so entsteht die Position, die in Figur 14, 14a dargestellt ist, in der das größere Zahnstangensegment, dessen Breite dem Abstand zwischen den beiden kleineren Ritzeln 16 entspricht, mit den beiden kleineren Ritzeln 16 in Eingriff tritt, während das kleinere Zahnstangensegment nicht mehr mit den größeren Ritzeln 15 in Eingriff ist.

In Figuren 15 bis 17 ist eine Ausführungsform gezeigt in der in das Getriebe ein Elektro-Motor integriert ist. Über ein Untersetzungsgetriebe greift der E-Motor mit dem Motorritzel über das Zwischenrad in die Gegenlaufwelle ein und treibt diese an. Über die Zahnscheibe der Gegenlaufwelle wird genau wie beim manuellen Antrieb die Kraft mittels Zahnriemen auf die Antriebswelle übertragen und auf das Antriebsrad 6 umgesetzt.

Da im Fahreinsatz der Einsatz der Bremse zu jedem Zeitpunkt möglich sein muss und die Deckplatte 2 auf Grund ihrer Antriebsfunktion immer eine andere Position einnimmt, kann keine starre Bremseinheit gewählt werden. Deshalb wurde ein Bremssystem entwickelt, welches alle Bewegungen der Deckplatte 2 mitmacht.

Das Bremssystem lässt sich insbesondere aus den Figuren 7 und 2entnehmen. Das Bremssystem ist in die Deckplatte 2 integriert. Es ist symmetrisch ausgelegt, damit unterschiedliche Fahrpositionen (linker Fuß hinten oder rechter Fuß hinten) ohne Zusatzteile gefahren werden kann.

Das Bremssystem besteht aus folgenden Hauptteilen:
Bremsplatte (5.1)
Drehbuchse (5.2)
Bremsnippel (5.3)
Bautenzug (5.5)
Gegenlager (5.6)
Hülse (5.7)

In der Deckplatte 2 befinden sich symmetrisch angebracht zwei Öffnungen 2.4 zur Aufnahme der Drehbuchsen 5.2. In eine dieser beiden Öffnungen ist die Hülse 5.7 als Drehlager für die Bremsplatte 5.1 eingesetzt. Die andere Seite ist frei. Die Bremsplatte 5.1 ist von oben mit beiden Drehbuchsen 5.2 in die Deckplatte 2 eingesetzt und von unten gesichert. Die Bremsplatte 5. 1 sitzt flächig auf der Deckplatte 2 auf. Auf Grund der einen freien Öffnung kann die Bremsplatte entsprechend der Freigängigkeit gedreht bzw. verschoben werden. In die Bremsplatte 5.1 ist der Bremsnippel 5.3 kraftschlüssig eingebaut, in welchen der Bautenzug 5.5 eingesetzt ist. Dieser wird über das Gegenlager 5.6 welches an der Deckplatte 2 befestigt ist abgestützt und zur Bremse 4.1 am Bremsrad geführt. Das Antriebsrad 6 ist vorzugsweise mit einer Trommelbremse ausgestattet, welche über das Bremssystem angesteuert wird. Die Radbremse kann ebenfalls über verschiedene Felgen- und Reifenbremssysteme erfolgen. Der Nutzer steht auf der Bremsplatte, welche mit Stützrippen 5.4 für die Fußanlage ausgerüstet ist und kann durch Drehen des Fußes die Bremsplatte 5.1 mit dem Bremsnippel 5.3 drehen. Dadurch wird der Bremsvorgang eingeleitet und entsprechend der Drehkraft die Bremswirkung erzielt.

Obwohl oben von einem Drehen der Bremsplatte 5.1 die Rede ist, kann die Bremsplatte 5. 1 auch lediglich nur seitlich verschiebbar gelagert sein. In diesem Fall wird die Bremsplatte 5.1 vom Fuß des Fahrers in die entsprechende Richtung geschoben, um die Bremswirkung zu erzielen.

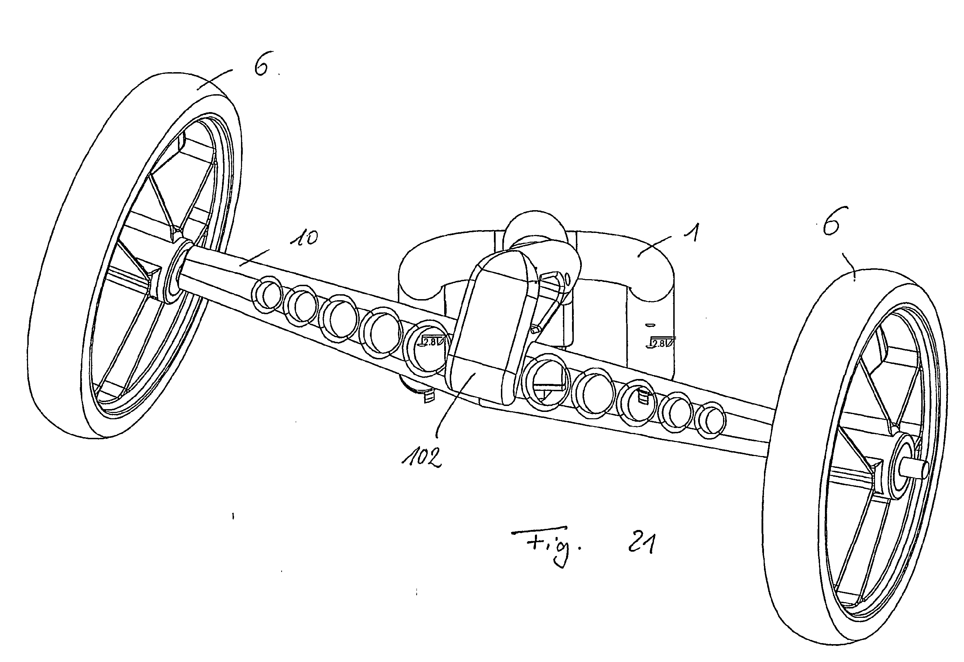

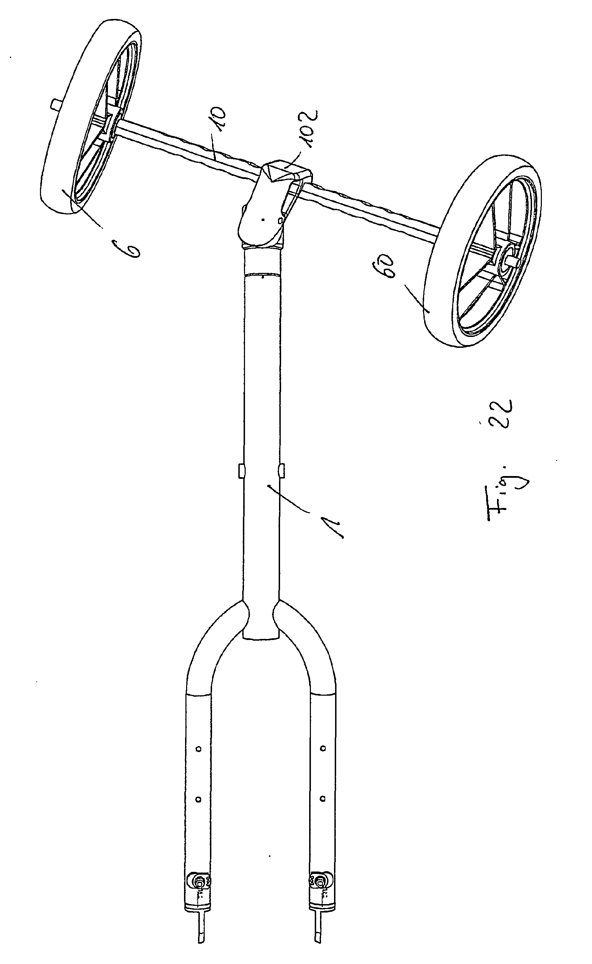

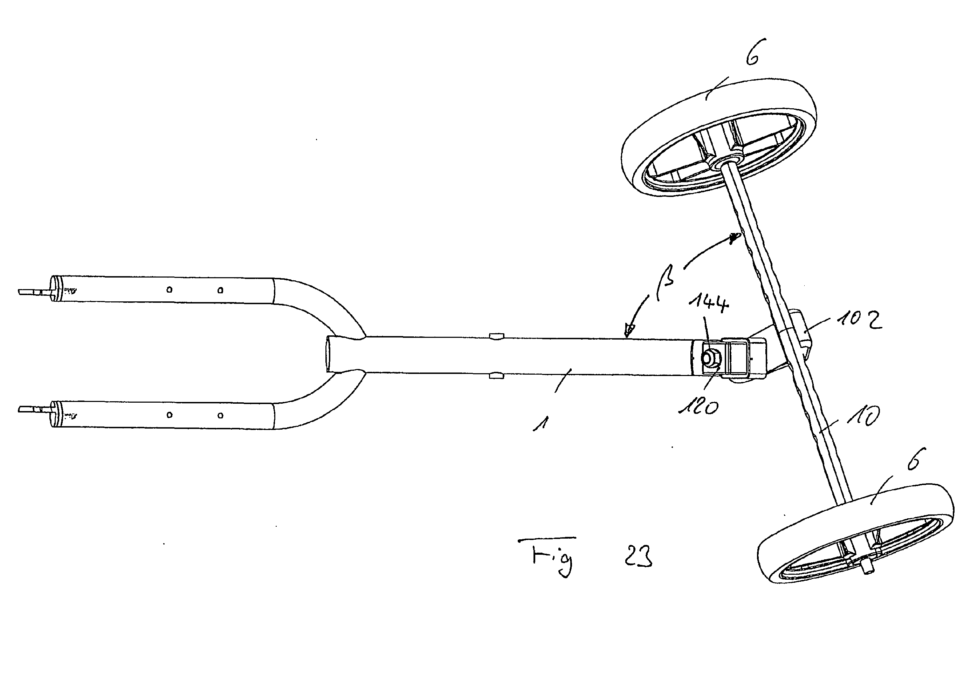

In den Figuren 18 bis 24 ist ein zweites Ausführungsbeispiel eines erfindungsgemäßen Sport- und Transportgerätes mit Deckplatte 2 dargestellt. Bei diesem Gerät ist im Gegensatz zu den in den Figuren 1 bis 17 dargestellten Ausführungsbeispiel die mechanische Verbindung zwischen Rahmen 1 und Vorderachse 10 auf besondere Art und Weise mittels eines Elastomere aufweisenden Federungssystems gelöst.

Figur 18 zeigt die perspektivische Ansicht von schräg unten, wobei das Gerät mit seiner Vorderachse 10 dem Betrachter zugewandt ist. Die bereits erläuterten Bezugszeichen werden für die gleichen Teile weiterverwendet. Der Mittelsteg des Rahmens 1 ist über ein Federungssystem, das das Bezugszeichen 100 trägt, an die Vorderachse 10, an deren linken und rechten Ende die Laufräder 6 befestigt sind, angekoppelt. Der Mittelsteg des Y-geformten Rahmens 1 ist an ein Rohrgelenk 104 starr angebunden. Dieses Rohrgelenk 104 weist an seinem vorderen, zur Vorderachse 10 hin zeigenden Ende eine vierkantförmige Öffnung auf, in welchem einem noch näher zu erläuternde Federeinrichtung mit Elastomeren sitzt. Der vordere Teil des Rohrgelenks 104 ist in einem Winkel α zur Fahrbahnoberfläche nach unten geknickt ausgeführt. Auf der Vorderachse 10 ist ein Verbindungsteil 102 feststehend aufgebracht. Dieses Verbindungsteil 102 liegt auf der oberen, freien Fläche des vorderen Teils des Rohrgelenks 104 flächig auf. Die Vorderachse 10 ist über dieses Verbindungsteil 102 beweglich über das Federungssystem 120 und das Rohrgelenk 104 an den Rahmen 1 gekoppelt.

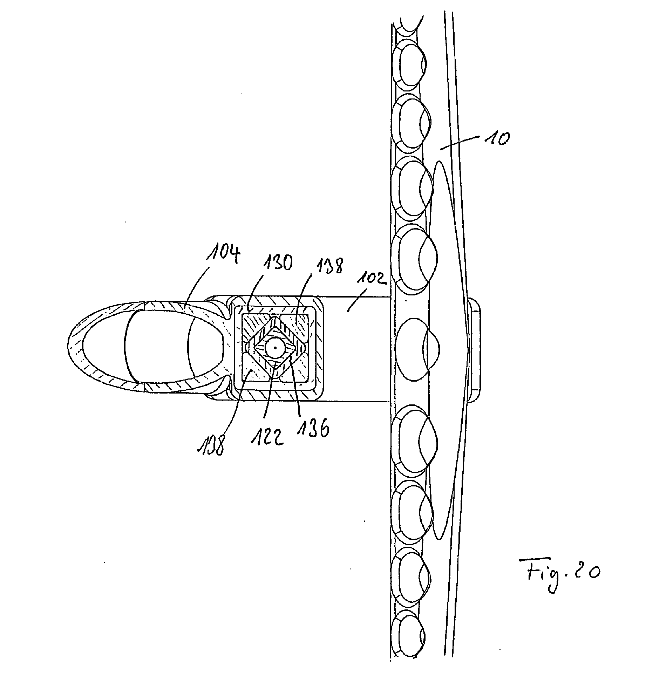

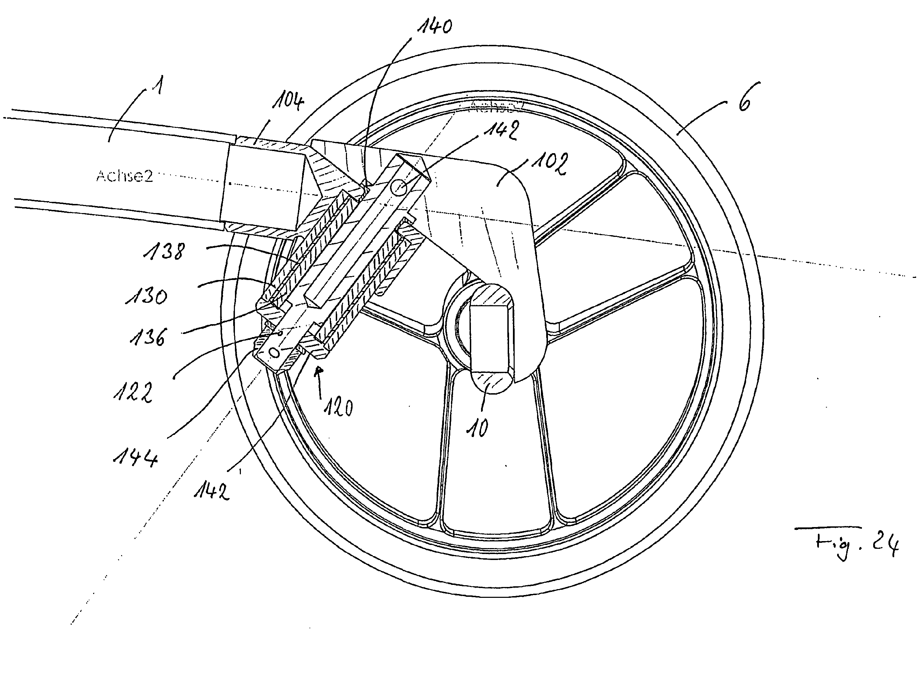

Die mechanische Kopplung über das Federungssystem 120 zwischen Rahmen 1 und Vorderachse 10 wird im Zusammenhang mit den Schnittdarstellungen von Figur 20 und Figur 24 besonders deutlich.

In einer Öffnung des Verbindungsteils 102 sitzt feststehend ein Bolzen 122. Die feststehende Verbindung kann beispielsweise durch eine lediglich durch das Bezugszeichen 142 angedeutete Verschraubung realisiert sein. Dieser Bolzen 122 ist so in dem Verbindungsteil 102 befestigt, daß sich dieser in Fahrtrichtung gesehen im schrägen Winkel nach hinten wegerstreckt. Der Bolzen 122 sitzt drehbeweglich in einer Gleitbuchse 140 des Rohrgelenks 104. Der Bolzen 122 hat einen rechteckförmigen Querschnitt. Auf diesem rechteckigen Querschnitt des Bolzen 122 sitzt ein Vierkantrohr 136. Ein äußeres Vierkantrohr 130 ist mit Abstand um das innere Vierkantrohr 136 angeordnet. Das Vierkantrohr 138 berührt zugleich die Außenwandung des Federungssystems 120. Zwischen dem äußeren Vierkantrohr 130 und dem inneren Vierkantrohr 136 sitzen im Winkel von jeweils 90 Grad versetzt Elastomerstreifen 138. Das Federungssystem 120 ist von einer Deckplatte 142 abgeschlossen und mittels Mutter 144, die auf das vom Verbindungsteil 102 wegweisende Ende des Bolzens 122 geschraubt wird, gehalten.

Die Funktionsweise des Federungssystems ist folgende.

Durch das Kippen des Y-Rohres des Rahmens 1 über die Deckplatte 2 wird das Rohrgelenk 104 und die Vorderachse 10 zueinander verdreht. Dabei verdreht sich auch der Bolzen 122 mit seinem Vierkant, welcher mit der Vorderachse 10 starr verbunden ist und somit auch das innenliegende Vierkantrohr 136 verdrehend mitnimmt. Da das außenliegende Vierkantrohr 130 an der vierkantförmigen Öffnung des Rohrgelenks 104 anliegt und daher nicht verdrehbar ist, steht die Vorderachse 10 im Ruhezustand im rechten Winkel zu dem Mittelrohr des Rahmens 1, d.h. β ist gleich 90 Grad.

Wird das Sport- und Transportgerät durch Gewichtsverlagerung über die Deckplatte 2 nach links bzw. rechts gekippt, erfährt das Federungssystem 102 eine Belastung, durch die die Vorderachse 10 für ein definiertes Lenken verstellbar ist. Der mögliche Lenkwinkel β ist direkt abhängig vom Verbindungswinkel α zwischen dem Rohrgelenk 104 und der Vorderachse 10 des Gerätes. Je größer der Winkel α ist, desto kleiner ist der Lenkwinkel β und umgekehrt. Der Winkel α kann dabei je nach Gerätekonzeption angepaßt werden, jeweils abhängig vom Einsatzbereich des Gerätes, ob im Gelände, auf glattem Untergrund, für Wettkampf bzw. andere Anwendungsbereiche.

In diesem Zusammenhang ist zu erwähnen, daß das beschriebene Gelenkachsensystem mit der Elastomere aufweisenden Federungseinrichtung 100 zwar sehr vorteilhaft ist, jedoch nicht zwingend angewendet werden muß. Andere Federsysteme sind ebenfalls möglich, um den Rahmen 1 mit der Vorderachse 10 zu koppeln.

Zweckmäßiger Weise wird das Federungssystem 120 austauschbar gestaltet. So können Federungssysteme 120 mit unterschiedlichen Federkräften zum Einsatz gebracht werden, d.h. das eine Bedienpersonjederzeit das Federungssystem 120 austauschen kann und dadurch das Fahr- bzw. Lenkverhalten des Gerätes auf seine speziellen Wünsche bzw. seine physikalischen Voraussetzungen, wie z.B. Körpergewicht und Fahrkönnen, anpassen kann. Die erwähnten Elastomere 138 sind unter Vorspannung zwischen das Vierkantrohr 136 und das außenliegende Vierkantrohr 130 eingesetzt.

## Patentansprüche

1. Sport- und Transportgerät, das mindestens eine Deckplatte (2), mindestens zwei Räder (6) und mindestens ein oberhalb der Deckplatte (2) befindliches Betätigungsmittel (5.1) für einen Fuß einer das Gerät bedienenden Person aufweist, **dadurch gekennzeichnet, dass** die Betätigungsmittel (5.1) als auf der Deckplatte (2) gelagerte Betätigungsplatte ausgebildet sind, welche eine Einrichtung für eine Fußanlage aufweist und welche in horizontaler Richtung zur Oberfläche der Deckplatte (2) verschieblich ist.

2. Sport- und Transportgerät gemäß Anspruch 1, **dadurch gekennzeichnet, dass** die Betätigungsmittel (5.1, 11) und die jeweilige Vorrichtung über Bautenzüge verbunden sind.

3. Sport- und Transportgerät gemäß Anspruch 1 oder 2, **dadurch gekennzeichnet, dass** die Vorrichtung und die dazugehörigen Betätigungsmittel ein Schaltsystem darstellen.

4. Sport- und Transportgerät gemäß Anspruch 3, **dadurch gekennzeichnet, dass** das Schaltsystem eine Kettenschaltung umfasst.

5. Sport- und Transportgerät gemäß Anspruch 3, **dadurch gekennzeichnet, dass** das Schaltsystem eine Zahnriemenschaltung umfasst.

6. Sport- und Transportgerät gemäß Anspruch 3, **dadurch gekennzeichnet, dass** das Schaltsystem eine Schiebeschaltung umfasst.

7. Sport- und Transportgerät gemäß Anspruch 5, **dadurch gekennzeichnet, dass** das Schaltsystem einen Schaltkäfig 14 aufweist.

8. Sport- und Transportgerät gemäß Anspruch 1, **dadurch gekennzeichnet, dass** die Vorrichtung und die dazugehörigen Betätigungsmittel ein Bremssystem 5 darstellen.

9. Sport- und Transportgerät gemäß einem der vorstehenden Ansprüche, **dadurch gekennzeichnet, dass** das Gerät einen Elektro-Motor umfasst, der mindestens ein Rad (6) antreibt.

10. Sport- und Transportgerät gemäß einem der vorstehenden Ansprüche, **dadurch gekennzeichnet, dass** der Rahmen (1) eine lenkbare Vorderachse (10) umfasst.

11. Sport- und Transportgerät gemäß einem der vorstehenden Ansprüche, **dadurch gekennzeichnet, dass** die Räder lösbar mit dem Rahmen (1) verbunden sind.

## Claims

1. Sports and transportation apparatus having at least one cover plate (2), at least two wheels (6) and at least one actuation element (5.1), located above the cover plate (2), for the foot of a person operating the device, **characterised in that** the actuation elements (5.1) are designed as an actuation plate which is borne on the cover plate (2) and which has an arrangement for a foot rest, and which can be moved in a horizontal direction to the surface of the cover plate (2).

2. Sports and transportation apparatus according to claim 1, **characterised in that** the actuation elements (5.1, 11) and the respective device are connected via pull cables.

3. Sports and transportation apparatus according to claim 1 or 2, **characterised in that** the device and the associated actuation elements represent a switching system.

4. Sports and transportation apparatus according to claim 3, **characterised in that** the switching system comprises a derailleur mechanism.

5. Sports and transportation apparatus according to claim 3, **characterised in that** the switching system comprises a toothed belt gear mechanism.

6. Sports and transportation apparatus according to claim 3, **characterised in that** the switching system comprises a sliding gear mechanism.

7. Sports and transportation apparatus according to claim 5, **characterised in that** the switching system has a switching cage 14.

8. Sports and transportation apparatus according to claim 1, **characterised in that** the device and the associated actuation elements represent a braking system 5.

9. Sports and transportation apparatus according to one of the preceding claims, **characterised in that** the apparatus comprises an electric motor that drives at least one wheel (6).

10. Sports and transportation apparatus according to one of the preceding claims, **characterised in that** the frame (1) comprises a front axle (10) that can be steered.

11. Sports and transportation apparatus according to one of the preceding claims, **characterised in that** the wheels are connected to the frame (1) in a detachable manner.

## Revendications

1. Appareil de sport et de transport qui présente au moins une plaque de couverture (2), au moins deux roues (6) et au moins un moyen d'actionnement (5.1), situé au-dessus de la plaque de couverture (2), destiné à un pied d'une personne actionnant l'appareil,
**caractérisé en ce que**
le moyen d'actionnement (5.1) est une plaque d'actionnement logée sur la plaque de couverture (2), qui présente un dispositif pour une installation prévue pour le pied et qui est mobile dans la direction horizontale par rapport à la surface de la plaque de couverture (2).

2. Appareil de sport et de transport selon la revendication 1,
**caractérisé en ce que**
les moyens d'actionnement (5.1, 11) et le dispositif respectif sont reliés par des tirants.

3. Appareil de sport et de transport selon la revendication 1 ou 2,
**caractérisé en ce que**
le dispositif et les moyens d'actionnement associés représentent un système de commande.

4. Appareil de sport et de transport selon la revendication 3,
**caractérisé en ce que**
le système de commande comprend un circuit de commande à chaînes.

5. Appareil de sport et de transport selon la revendication 3,
**caractérisé en ce que**
le système de commande comprend un circuit de commande à courroie dentée.

6. Appareil de sport et de transport selon la revendication 3,
**caractérisé en ce que**
le système de commande comprend un circuit de commande à tiroir.

7. Appareil de sport et de transport selon la revendication 5,
**caractérisé en ce que**
le système de commande présente une cage de commande (14).

8. Appareil de sport et de transport selon la revendication 1,
**caractérisé en ce que**
le dispositif et les moyens d'actionnement associés représentent un système de freinage (5).

9. Appareil de sport et de transport selon l'une quelconque des revendications précédentes,
**caractérisé en ce que**
l'appareil comprend un moteur électrique qui entraîne au moins une roue (6).

10. Appareil de sport et de transport selon l'une quelconque des revendications précédentes,
**caractérisé en ce que**
le châssis (1) comprend un essieu avant (10) orientable.

11. Appareil de sport et de transport selon l'une quelconque des revendications précédentes,
**caractérisé en ce que**
les roues sont reliées de façon amovible au châssis (1).
